(19) Europäisches Patentamt
European Patent Office
Office européen des brevets

(11) **EP 2 372 871 A2**

(12) **EUROPEAN PATENT APPLICATION**

(43) Date of publication:
**05.10.2011 Bulletin 2011/40**

(51) Int Cl.:
**H02K 1/14** *(2006.01)*  **H02K 1/27** *(2006.01)*

(21) Application number: **11159721.7**

(22) Date of filing: **25.03.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **31.03.2010 JP 2010083193**

(71) Applicant: **Fujitsu General Limited
Kawasaki
Kanagawa
213-8502 (JP)**

(72) Inventors:
• **Fujioka, Takushi
Kawasaki Kanagawa 213-8502 (JP)**

• **Tanabe, Yoichi
Kawasaki Kanagawa 213-8502 (JP)**
• **Hamano, Takuya
Kawasaki Kanagawa 213-8502 (JP)**
• **Suzuki, Shingo
Kawasaki Kanagawa 213-8502 (JP)**
• **Katagiri, Shinichiro
Kawasaki Kanagawa 213-8502 (JP)**

(74) Representative: **Pautex Schneider, Nicole
Véronique et al
Novagraaf International SA
Chemin de l'Echo 3
1213 Onex (CH)**

(54) **Permanent magnet motor**

(57)     A permanent magnet motor is provided. The permanent magnet motor includes: a stator including a stator core, and an insulator for insulating the stator core from the wire; and a rotor in which a rotating shaft is attached to a center of the rotor and a permanent magnet is provided in an outer peripheral portion of the rotor. The stator core includes an annular yoke portion, a plurality of teeth extended radially from an inner periphery of the yoke portion, and a plurality of slots for accommodating a wire to be wound around the teeth at both ends in a circumferential direction of the teeth. A number of the slots in the stator core is set to be 18, the permanent magnet of the rotor is formed by a ferrite magnet, and a number of poles of the permanent magnet is set to be 12.

*FIG. 2*

EP 2 372 871 A2

**Description**

FIELD OF THE INVENTION

The present disclosure relates to a permanent magnet motor, and more particularly to a permanent magnet motor for driving a blast fan in an air conditioner for which a high efficiency is required at a low cost.

DESCRIPTION OF RELATED ART

As a motor for driving a blast fan in an air conditioner having a cooling capability of 7 kw or less (a so-called domestic room air conditioner), there is generally used a permanent magnet motor including a stator and a rotor which has a rotating shaft attached to a center and provided with a permanent magnet having eight magnetic poles in an outer peripheral portion. In the stator, a wire is wound through an insulator to be an insulating member around 12 teeth formed on an inner periphery of a yoke portion of an annular stator core, and the wire is accommodated in the same number of slots provided on both sides of the teeth as the number of the teeth (for example, see Japanese Patent Application Publication No. JP-A-2003-125569). Moreover, the stator has a structure in which a stator core has an outside diameter of approximately 90 mm in respect of a space in which the motor is to be installed in the domestic room air conditioner.
As a rotor of a motor for driving a blast fan in an air conditioner such as a domestic room air conditioner, there is known a rotor using, as a magnetic material, a ferrite magnet containing iron oxide to be a main component. However, a further increase in an efficiency is required greatly. In order to meet the requirement, there is utilized a rare-earth magnet using neodymium (Nd) or samarium (Sm) to be a rare earth element having a higher magnetic flux density than the ferrite magnet.
However, the rare-earth magnet is more expensive than the ferrite magnet. Therefore, in the case in which the rare-earth magnet is used as a magnetic material, a cost of a motor is increased.

SUMMARY OF INVENTION

Illustrative aspects of the present invention provide a permanent magnet motor having a high efficiency at a low cost.
According to a first aspect of the invention, a permanent magnet motor comprising:

a stator including a stator core, and an insulator for insulating the stator core from the wire; and
a rotor in which a rotating shaft is attached to a center of the rotor and a permanent magnet is provided in an outer peripheral portion of the rotor,
wherein the stator core includes an annular yoke portion, a plurality of teeth extended radially from an inner periphery of the yoke portion, and a plurality of slots for accommodating a wire to be wound around the teeth at both ends in a circumferential direction of the teeth, and
wherein a number of the slots in the stator core is set to be 18, the permanent magnet of the rotor is formed by a ferrite magnet, and a number of poles of the permanent magnet is set to be 12.

BRIEF DESCRIPTION OF THE DRAWINGS

Fig. 1 is a longitudinal sectional view taken along a center of a permanent magnet motor according to an embodiment of the invention;
Fig. 2 is a front view showing an example of a stator core and a rotor in the motor;
Fig. 3 is a perspective view showing the stator core and the rotor illustrated in Fig. 2;
Fig. 4 is a front view showing another example of the stator core and the rotor in the motor;
Fig. 5 is a perspective view showing the stator core and the rotor illustrated in Fig. 4;
Fig. 6 is an explanatory view showing a permanent magnet motor using a stator core having 12 slots;
Fig. 7 is an explanatory view showing a permanent magnet motor using a stator core having 24 slots;
Fig. 8 is a table for explaining a relationship between a winding specification and a winding resistance in a motor;
Figs. 9A to 9C are tables for comparing a rotating speed and torque characteristic of a fan, illustrating an operating point for each motor and a torque on the operating point;
Fig. 10 is a graph for comparing the rotating speed and torque characteristic of the fan, illustrating the operating point for each motor and the torque on the operating point;
Figs. 11A to 11C are graphs showing an efficiency characteristic, a loss characteristic and a phase current on each operating point with a variation in the number of slots in a motor A;

Figs. 12A to 12C are graphs showing an efficiency characteristic, a loss characteristic and a phase current on each operating point with a variation in the number of slots in a motor B;

Figs. 13A to 13C are graphs showing an efficiency characteristic, a loss characteristic and a phase current on each operating point with a variation in the number of slots in a motor C;

Fig. 14 is a chart showing an effective range characteristic of the motor A;

Fig. 15 is a chart showing an effective range characteristic of the motor B;

Fig. 16 is a chart showing an effective range characteristic of the motor C;

Fig. 17 is a chart showing a comparison of a rotating speed - efficiency characteristic which is obtained in the cases in which a ferrite bond magnet and a ferrite sintered magnet are used in a rotor of the motor A respectively;

Fig. 18 is a chart showing a comparison of a rotating speed - loss characteristic which is obtained in the cases in which the ferrite bond magnet and the ferrite sintered magnet are used in the rotor of the motor A respectively;

Fig. 19 is a chart showing a comparison of a rotating speed - loss characteristic which is obtained in the cases in which the ferrite bond magnet and the ferrite sintered magnet are used in a rotor of the motor B respectively; and

Fig. 20 is a chart showing a comparison of a rotating speed - loss characteristic which is obtained in the cases in which the ferrite bond magnet and the ferrite sintered magnet are used in the rotor of the motor B respectively.

DETAILED DESCRIPTION OF EXEMPLARY EMBODIMENTS

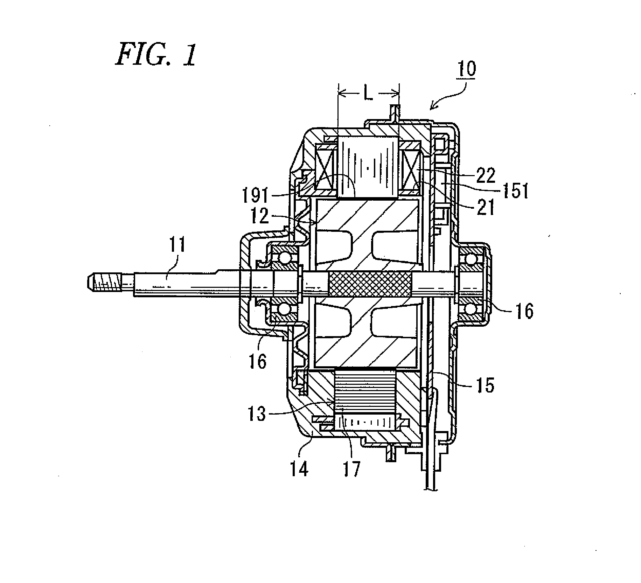

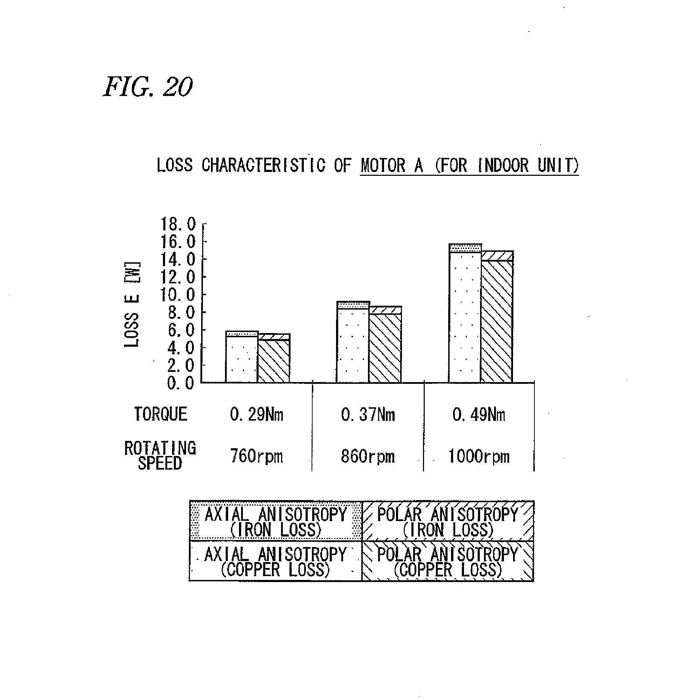

A preferred embodiment according to the invention will be described below in detail with reference to Figs. 1 to 20. The same elements have the same reference numerals throughout the description of each embodiment.

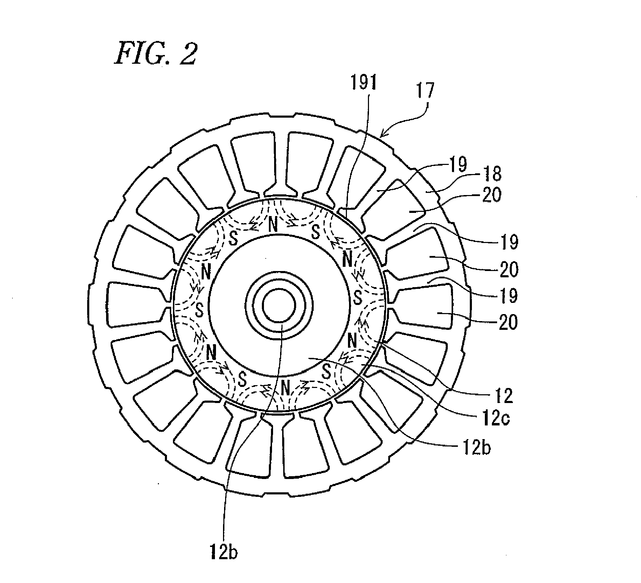

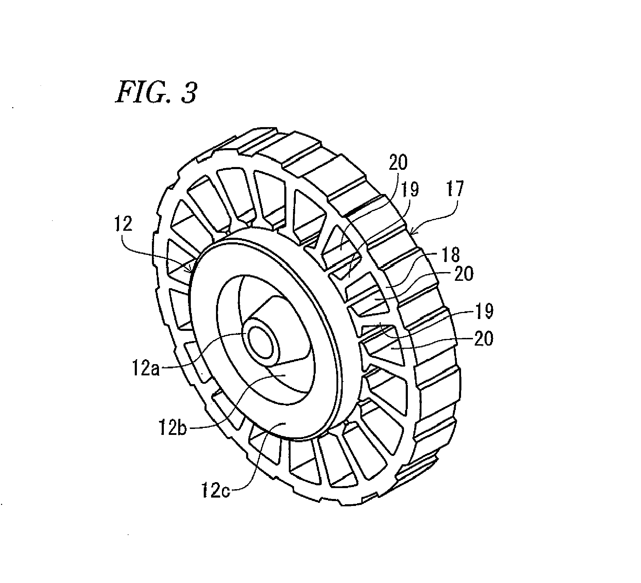

Figs. 1 to 3 show an embodiment of a permanent magnet motor according to the invention. Fig. 1 is a longitudinal sectional view taken along a center of the motor, Fig. 2 is a front view showing a stator core and a rotor in the motor, and Fig. 3 is a perspective view showing the stator core and the rotor.

In Figs. 1 to 3, a permanent magnet motor 10 includes a rotating shaft 11 provided in a central part, a rotor 12 formed integrally with the rotating shaft 11 and carrying out a rotation integrally with the rotating shaft 11, and a stator 13 disposed opposite to the rotor 12 in a radial direction with a certain gap between the stator 13 and the rotor 12. As the permanent magnet motor 10 according to the embodiment, there is taken, as an example, a motor for driving a blast fan of a domestic room air conditioner including a single indoor unit and a single outdoor unit. Referring to use in the indoor unit, a cross flow fan is attached to the rotating shaft 11. Referring to use in the outdoor unit, a propeller fan is attached to the rotating shaft 11.

As shown in Fig. 1, the stator 13 is covered with a cylindrical housing 14 formed by a molding resin except for an opposed surface in the radial direction to the rotor 12 (a teeth tip surface 191). A pair of bearings 16 and 16 are held on both of left and right sides (in Fig. 1) of the housing 14 and an inner diameter side thereof respectively, and the rotating shaft 11 disposed on the inner diameter side of the housing 14 is pivotally supported rotatably by means of the pair of bearings 16 and 16. Moreover, a circuit board 15 for controlling an operation of the permanent magnet motor 10 is disposed on one end surface side (a right end surface in Fig. 1) in a direction of the rotating shaft of the housing 14, and a controller 151 for controlling a conduction to a wire, a position detecting sensor for detecting a rotating position of the rotor 12 which is not shown, and furthermore, various electronic components are mounted on a mounting surface of the circuit board 15.

The stator 13 includes a stator core 17 in which eighteen teeth 19 extended from an inner periphery of an annular yoke portion 18 toward a center are provided at an equal interval as shown in Figs. 2 and 3, and has a structure in which an insulator 21 is attached to a slot 20 formed on each side of the teeth 19 and both end surfaces in a direction of a rotating shaft of the stator core 17 as shown in Fig. 1 and a three-phase wire 22 is applied to the slot 20 through the insulator 21. In other words, the stator 13 according to the embodiment has a structure in which the three-phase wire 22 is accommodated in the slot 20 of the stator core 17 having 18 slots. The stator core 17 is formed by laminating a plurality of steel plates punched with the yoke portion 18, the teeth 19 and the slot 20 provided integrally. As shown in Fig. 1, a thickness of the lamination of the steel plates (hereinafter referred to as a "lamination thickness") is represented by L.

On the other hand, the rotor 12 disposed opposite to an inner peripheral portion of the stator 13 includes a cylindrical jointing portion 12a to be jointed to the rotating shaft 11, a disc-shaped support portion 12b protruded in the radial direction from an outer peripheral surface of the jointing portion 12a, and a cylindrical magnetizing portion 12c extended in an axial direction from an end in the radial direction of the support portion 12b. In the magnetizing portion 12c, 12 magnetic poles are polarized in such a manner that magnetic poles N and S are alternately disposed in a circumferential direction.

In the rotor 12, moreover, a resin material having a powdered ferrite magnetic substance mixed therein is molded integrally with the rotating shaft 11. In the molding, a magnetic field is applied from an outside to the magnetizing portion 12c to align an orientation of an easy axis of magnetization (a direction in which the magnetization is apt to occur) with a polar anisotropy (a direction shown in a dotted line of Fig. 2). Then, the magnetizing portion 12c is magnetized in the orientation to form a ferrite bond magnet. Although the ferrite bond magnet is molded integrally with the rotating shaft 11 in the embodiment, the invention is not restricted thereto. For instance, the ferrite bond magnet may be molded separately from the rotating shaft so as to be then press fitted therein.

In the permanent magnet motor 10 thus constituted, the controller 151 controls the conduction to the wire 22 depending on the rotating position of the rotor 12 which is detected by the position detecting sensor (not shown), thereby generating a rotating magnetic field in the stator 10. Thus, the rotor 12 can be rotated together with the rotating shaft 11.

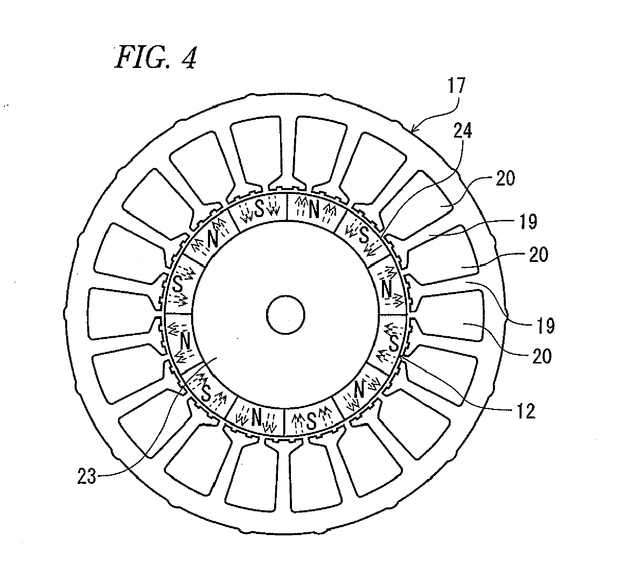

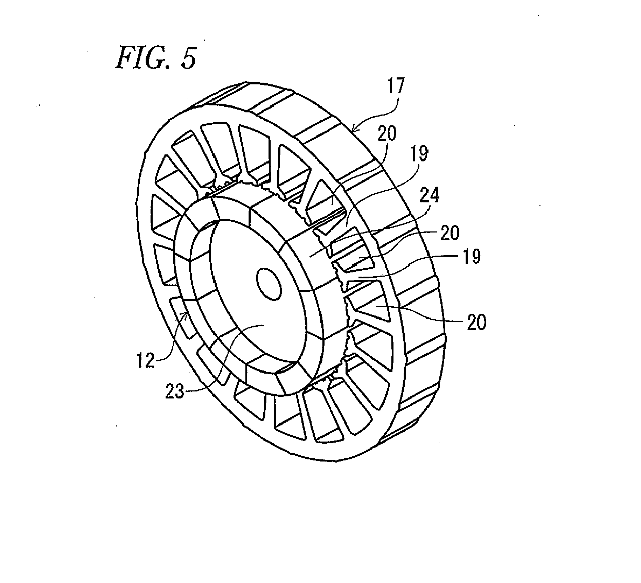

Referring to the rotor 12 shown in Figs. 2 and 3, the description has been given to the case in which the ferrite bond magnet obtained by mixing the ferrite magnetic substance into the resin material is used. However, it is also possible to use a ferrite sintered magnet obtained by burning and hardening a powdered ferrite magnetic substance in a metal mold. In this case, as shown in Figs. 4 and 5, a fitting support portion 23 of the rotor 12 which is to be fitted in the rotating shaft 11 is cylindrically formed by a laminated steel plate and 12 divided ferrite sintered magnet segments 24 having sections taking an almost arcuate shape are disposed at an equal interval over an outer peripheral surface of the fitting support portion 23, and the rotor 12 having the ferrite sintered magnet segments 24 as polarizing portions is used. In this case, the ferrite sintered magnet segments 24 disposed on the outer peripheral surface of the fitting support portion 23 are magnetized in a radial direction (a direction shown in a dotted line of Fig. 4) and the adjacent ferrite sintered magnet segments 24 are provided to have N and S disposed alternately, that is, reverse magnetic poles.

The permanent magnet motor 10 thus constituted by the ferrite magnet requires a lower cost than in the case in which a rare-earth magnet is used. As will be described below in detail, it is possible to obtain a motor having a high efficiency by setting 18 slots and 12 poles. In order to confirm functions and advantages in the permanent magnet motor 10, the following verification tests 1 to 4 were executed.

In the verification tests, three types of motors (motors A, B and C) having different lamination thicknesses L from each other in stator cores are used in a permanent magnet motor in which a stator core has an outside diameter of 89 mm and a permanent magnet of a rotor is set to be a ferrite bond magnet. With an increase in the lamination thickness L of the stator core, the permanent magnet motor can be operated in a high torque. A length HM in the axial direction of the magnetizing portion 12c in the rotor is also varied depending on the lamination thickness L of the stator core.

$$\text{Motor A:} \quad L = 10.5\ mm,\ HM = 23.0\ mm$$
$$\text{Motor B:} \quad L = 13.5\ mm,\ HM = 25.0\ mm$$
$$\text{Motor C:} \quad L = 18.5\ mm,\ HM = 31.1\ mm$$

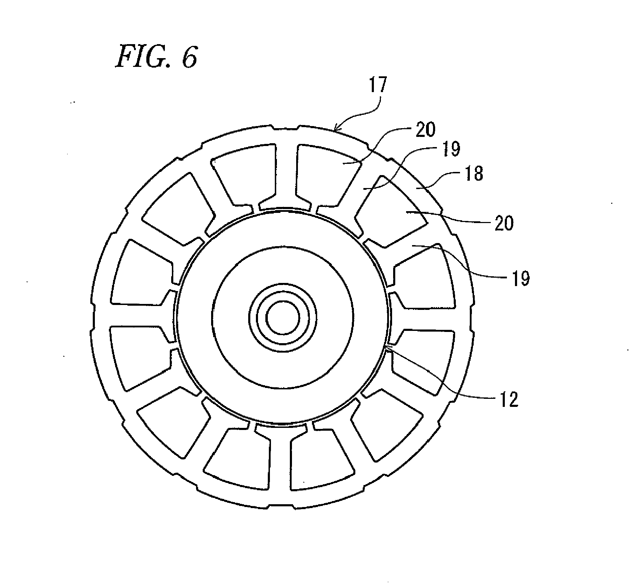

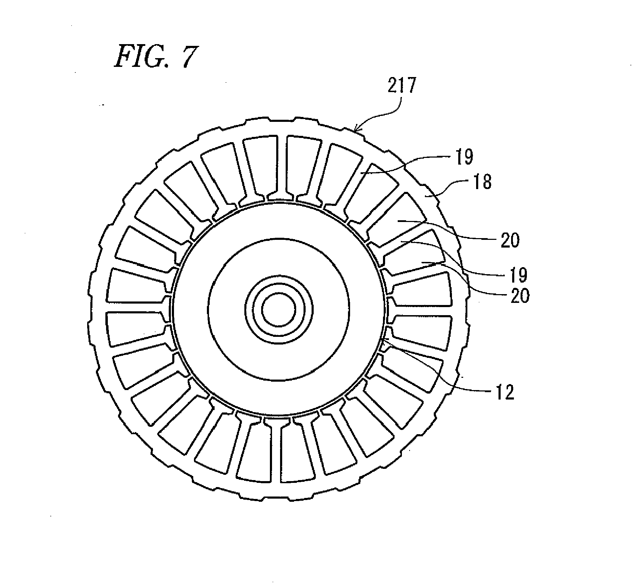

In the three types of motors, the following verifications were executed in each of the case in which 18 slots and 12 poles (18S) are set as shown in Figs. 2 to 5, the case in which 12 slots and 8 poles (12S) are set as shown in Fig. 6, and the case in which 24 slots and 18 poles (24S) are set as shown in Fig. 7.

(Verification Test 1)

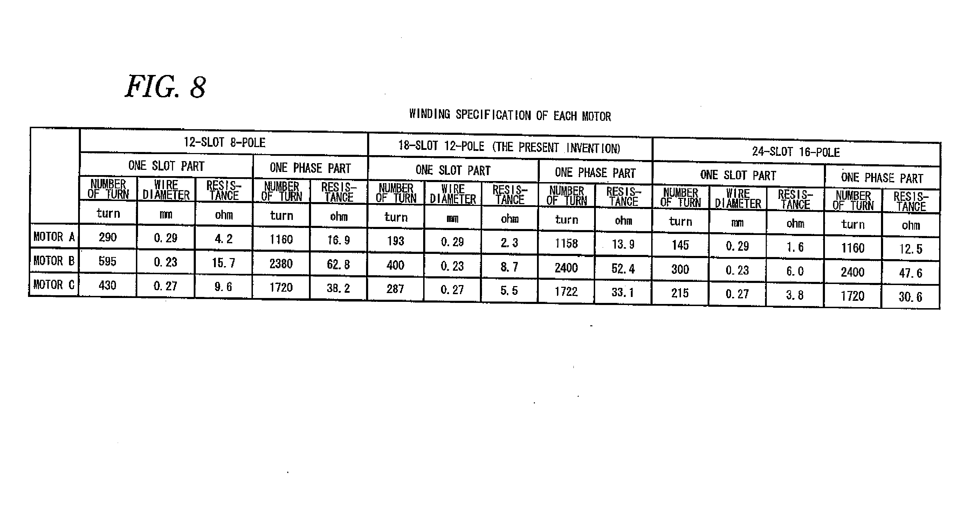

In the test, a relationship between the number of slots and a winding resistance is verified. Fig. 8 shows a winding specification (the number of turns, a wire diameter and a winding resistance) of the stator in the case in which the motors A, B and C are set to have 12 slots and 8 poles (12S), 18 slots and 12 poles (18S), and 24 slots and 16 poles (24S). An induction voltage is set to be equal (the total number of turns of a wire per phase is set to be equal) in such a manner that a drive enabling range of a permanent magnet motor (a range of a torque - a rotating speed in which the permanent magnet motor can be driven) is equal even if the numbers of the slots and the poles are varied.

As a result of the verification test 1, it is apparent that the winding resistance corresponding to one phase is gradually reduced with an increase in the number of the slots in order of 12 slots, 18 slots and 24 slots in each of the motors A, B and C.

(Verification Test 2)

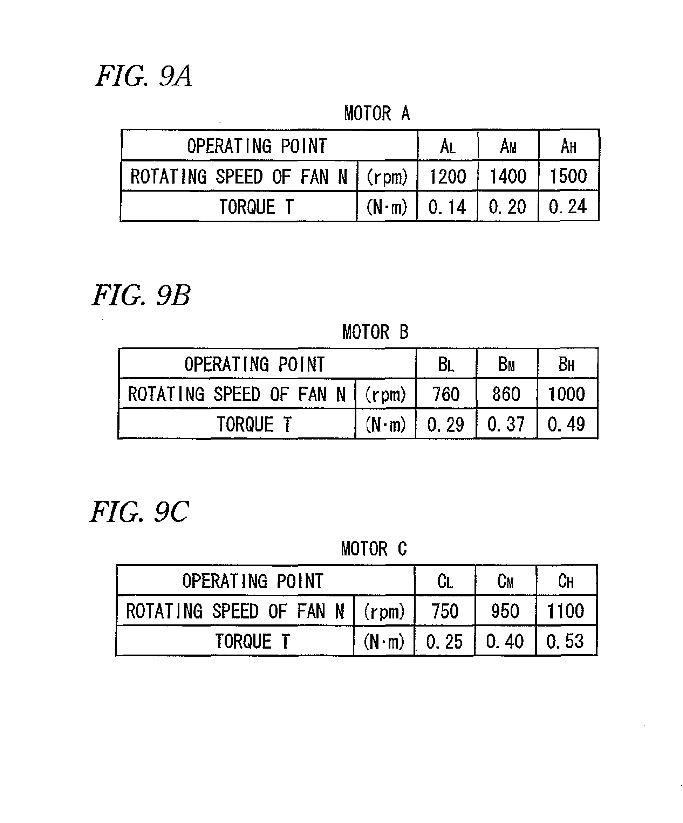

In the test, there are compared and verified motor efficiencies in the case in which the numbers of the slots and the poles in the motors A, B and C are changed into 12 slots and 8 poles (12S), 18 slots and 12 poles (18S), and 24 slots and 16 poles (24S). Figs. 9A to 10 show an operating point (a rotating speed and a torque) in the test for each of the motors A, B and C. The operating point is disposed on "a rotating speed - torque characteristic curve for a blast fan to be attached to a rotating shaft of the motor (an operating range of the motor)". A blast fan of a domestic room air conditioner is generally operated in three modes, that is, a strong wind mode (High mode), a middle wind mode (Middle mode) and a weak wind mode (Low mode) in descending order of a quantity of air blow. Three operating points ($A_L$, $A_M$, $A_H$; $B_L$, $B_M$, $B_H$; $C_L$, $C_M$, $C_H$) shown in Figs. 9A to 10 correspond to the three modes.

The rotating speed - torque characteristic curve for a blast fan draws a quadratic curve in which a torque T is proportional to a square of a rotating speed N as is expressed in the following equation (1).

$$T = kN^2 \qquad (1)$$

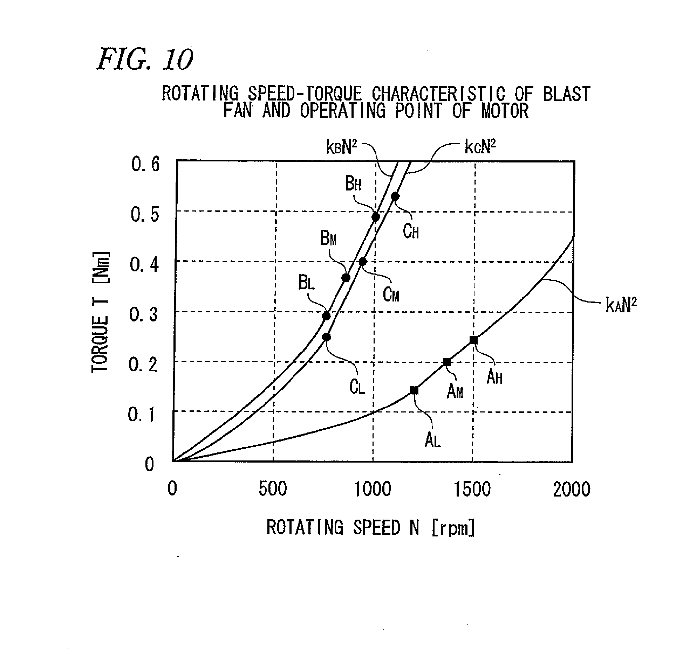

Herein, k represents a fan constant determined by a type of the blast fan. The fan constant k is determined by a shape or a size of the blast fan such as a cross flow fan or a propeller fan. In the verification test, an efficiency of each of the motors A, B and C is verified in the case in which three blast fans having fan constants $k_a$, $k_b$ and $k_c$ are attached to the motors A, B and C respectively and the numbers of slots and poles are varied. The blast fan to be attached to the motor A is a cross flow fan to be used in an indoor unit and has the fan constant $k_a$ of 1.07 X 10-7. Moreover, both of the blast fans to be attached to the motors B and C are propeller fans to be used in an outdoor unit and have the fan constants $k_b$ and $k_c$ of 4.41 X 10-7 and 4.87 X 10-7, respectively. As is apparent from Fig. 10, an operating point having a high torque is set to be an operating point of the motor C to which the blast fan having the fan constant $K_c$ is to be attached. The reason is that the motor C can be driven in a great lamination thickness L of a stator core and a high torque. The motor C is provided in an energy saving type air conditioner.

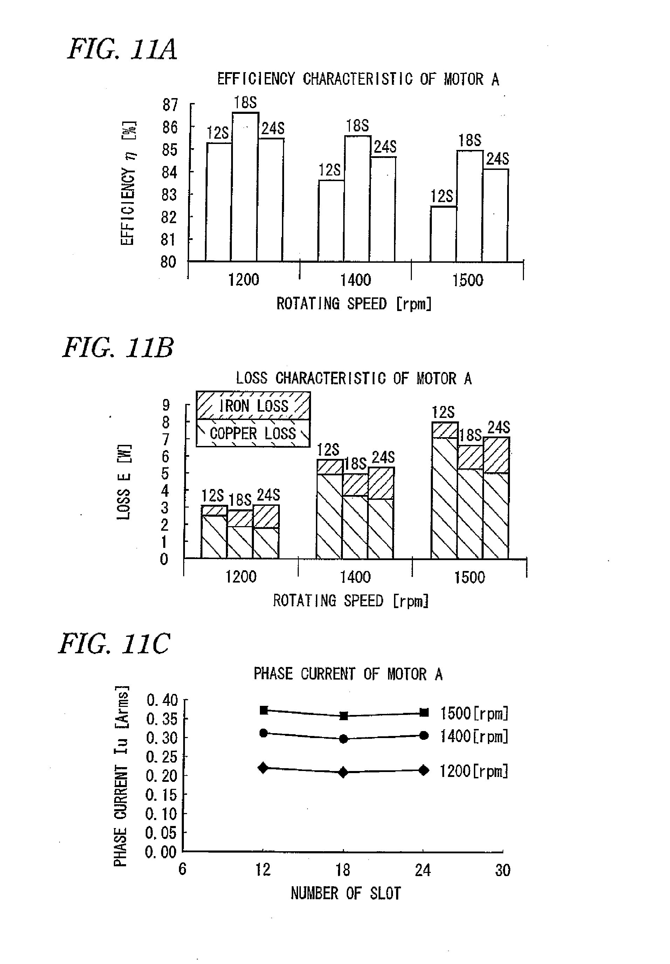

Figs. 11A to 11C are graphs showing test results for (a) an efficiency characteristic (Fig. 11A), (b) a loss characteristic (Fig. 11B) and (c) a phase current (Fig. 11C) which are obtained by an operation on each of the operating points illustrated in Figs. 9A to 10 in which the numbers of the slots and the poles in the motor A are set to be 12 slots and 8 poles (12S), 18 slots and 12 poles (18S), and 24 slots and 18 poles (24S), respectively. An efficiency η on an axis of ordinate in the efficiency characteristic is calculated in $(P_{out}/P_{in})$ X 100, wherein an electric power input to the motor is represented by $P_{in}$ and an output (a power) sent from the motor is represented by $P_{out}$. The efficiency η is reduced with an increase in a loss E of the motor (a sum of an iron loss and a copper loss).

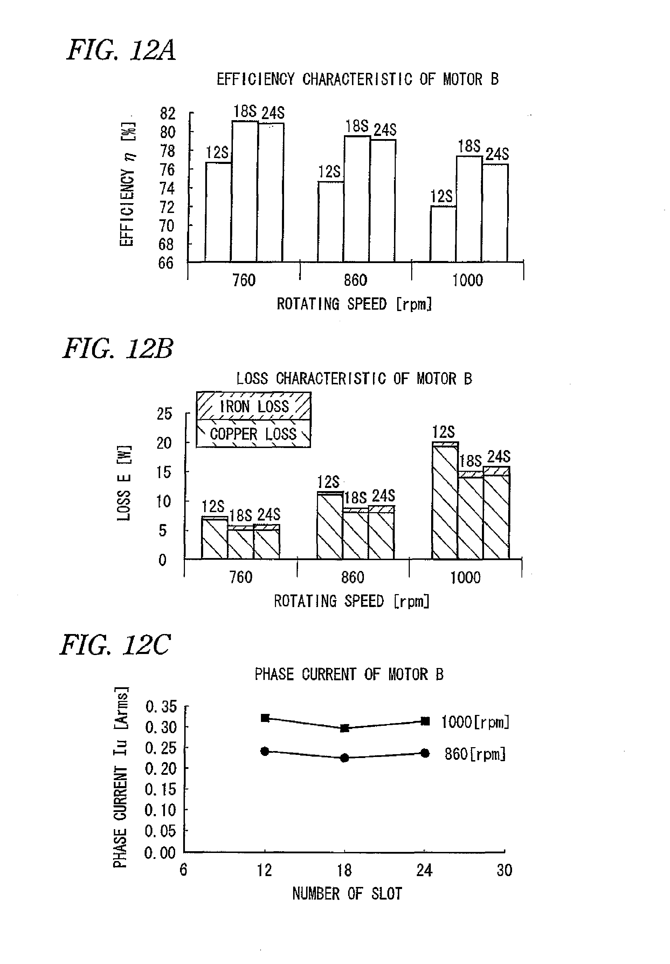

Figs. 12A to 12C are graphs showing test results for (a) an efficiency characteristic (Fig. 12A), (b) a loss characteristic (Fig. 12B) and (c) a phase current (Fig. 12C) which are obtained by an operation on each of the operating points illustrated in Figs. 9A and 10 in which the motor B is set into 12S, 18S and 24S in the same manner as the motor A.

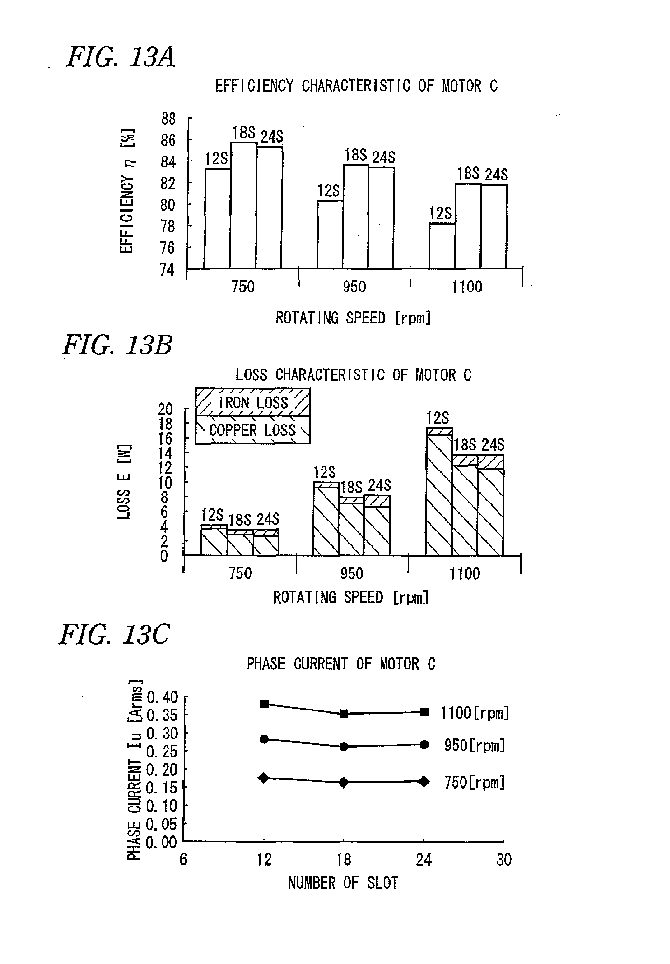

Figs. 13A to 13C are graphs showing test results for (a) an efficiency characteristic (Fig. 13A), (b) a loss characteristic (Fig. 13B) and (c) a phase current (Fig. 13C) which are obtained by an operation on each of the operating points illustrated in Figs. 9A and 10 in which the motor C is set into 12S, 18S and 24S in the same manner as the motor A.

As shown in Figs. 11A, 12A and 13A, the result of the verification test 2 indicates that the case of 18-slot and 12-pole (18S) is the most efficient for the motors A, B and C. This is caused by a variation in the iron loss and the copper loss illustrated in each of the loss characteristic in Fig. 11B, the loss characteristic in Fig. 12B and the loss characteristic in Fig. 13B.

The copper loss is proportional to a multiplication of a square of a phase current by a resistance (a resistance corresponding to a single phase). Moreover, a phase resistance is reduced with an increase in the number of slots as shown in Fig. 8 and it is apparent from Figs. 11C, 12C and 13C that the phase current is almost constant. For this reason, when the number of slots is increased, the copper loss is decreased. On the other hand, the iron loss represents a sum of a term which is proportional to a square of the number of poles and a term which is proportional to a power of the number of poles. For this reason, when the number of poles is increased, the iron loss is increased. On each of the operating points shown in Figs. 9A and 10, the sum of the copper loss and the iron loss is a minimum in 18-slot and 12-pole (18S). Therefore, it is apparent from Figs. 11A to 13C showing the result of the verification test 2 that the motor having 18 slots and 12 poles exhibits the highest efficiency.

(Verification Test 3)

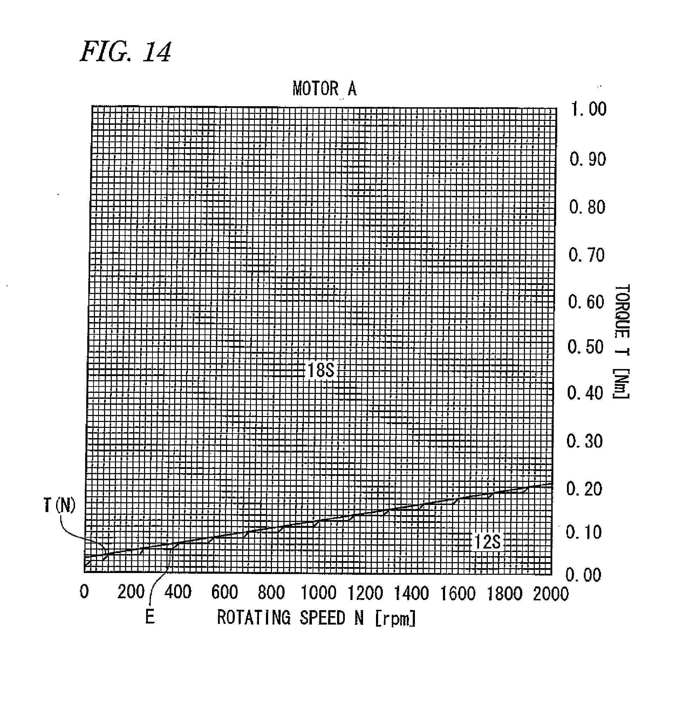

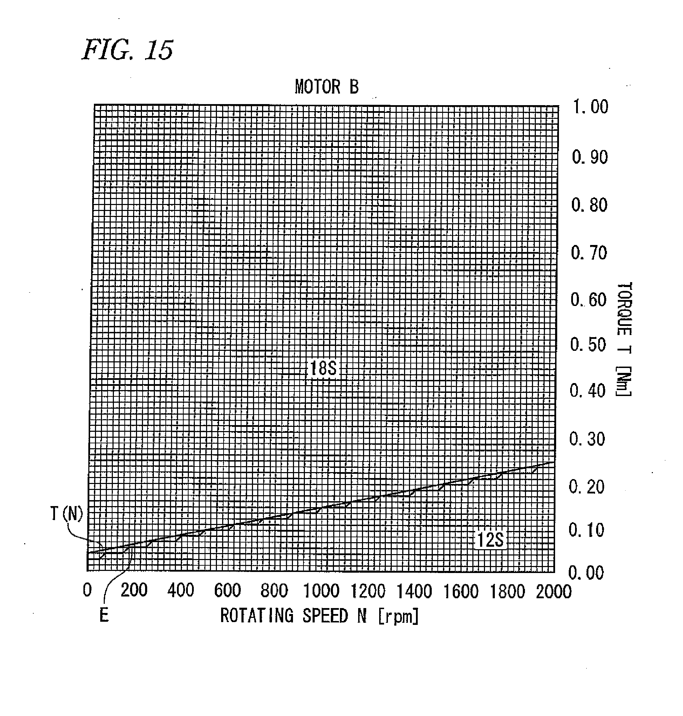

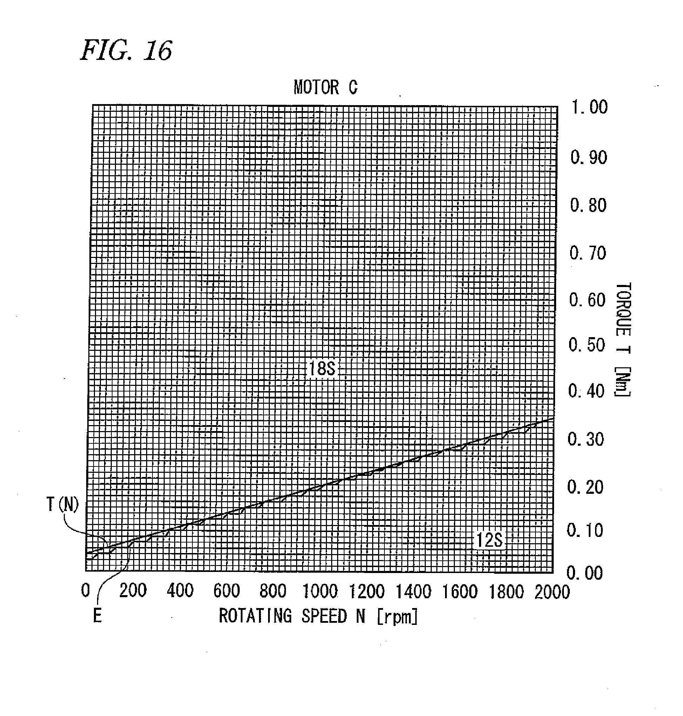

In the test, there is verified a relationship between any of a range in which a permanent magnet motor formed with a stator core having an outside diameter of approximately 90 mm can be driven and a motor having 18 slots and 12 poles exhibits a high efficiency and a lamination thickness L of the stator core. Within the range in which the permanent magnet motor formed with the stator core having the outside diameter of approximately 90 mm can be driven, generally, an output torque T is equal to or smaller than 1 Nm and a rotating speed N is equal to or lower than 2000 rpm. Fig. 14 is a chart showing a range in which an efficiency is enhanced in the case of 18S and a range in which the efficiency is enhanced in the case of 12S as a result of the calculation and comparison of the efficiency of the motor A in the case in which the motor A is set to have 18 slots and 12 poles (18S) and the case in which the motor A is set to have 12 slots and 8 poles (12S). Figs. 15 and 16 show a range in which the efficiency is enhanced in the case of 18S and a range in which the efficiency is enhanced in the case of 12S as a result of the calculation and comparison of the efficiency of each of the motors B and C in the same manner as Fig. 14. In the case of the motor including the stator core having the outside diameter of approximately 90 mm, it is hard to cause the number of slots to be larger than 18 in respect of a manufacture of the stator core. Therefore, the verification test is executed for the 18-slot and 12-pole motor 18S and the 12-slot and 8-pole motor 12S.

In the verification test, within the range in which the permanent magnet motor formed with the stator core having the outside diameter of approximately 90 mm can be operated (the output torque T is equal to or smaller than 1 Nm and the rotating speed N is equal to or lower than 2000 rpm), axes of ordinate and abscissa for dividing each of the rotating speed N and the torque T into 80 parts are drawn and a point on an intersection point is set to be an operating point. Thus, the efficiency of the motor is obtained.

As a result of the verification test 3, the 18-slot and 12-pole(18S) motor exhibits a higher efficiency than the 12-slot and 8-pole (12S) motor on operating points at an upper side with a stepwise borderline E shown in Figs. 14 to 16 set to be a boundary (which includes the borderline E). On the other hand, the 12-slot and 8-pole (12S) exhibits a higher efficiency within a range on a lower side of the borderline E. Referring to the borderline E, it is apparent that a gradient of the borderline E and a torque value with a rotating speed of zero are gradually increased from the motor A to the motor C as shown in Figs. 14 to 16. Taking note of a gradual increase in the lamination thickness L of the stator core from the motor A to the motor C, a relationship between the borderline E and the lamination thickness L of the stator core is examined. It is apparent that T(N) and the lamination thickness L of the stator core (a unit of millimeter) have the following relationship, wherein a straight line connecting apexes of convex portions protruded toward a high torque side in the operating points over the borderline E is represented by T(N).

$$T(N) = 7.68 \times 10^{-6}NL + 2.40 \times 10^{-3}L \qquad (2)$$

As described above, T(N) connects the apexes of the convex portions protruded toward the high torque side in the operating points over the borderline E. Therefore, the 18S motor exhibits a high efficiency at the operating points on and above the straight line T(N). The straight line T(N) is proportional to the lamination thickness L of the stator core. In a motor including a stator core having a great lamination thickness L, therefore, it is apparent that a range exhibiting a high efficiency appears on the high torque side in the case of 18S. On the other hand, in a motor having a small lamination thickness L, it is apparent that a range exhibiting a high efficiency in the case of the 18-slot and 12-pole is enlarged and also appears on a low torque side. In other words, in the verification test 2, it is indicated that 18-slot and 12-pole (18S) exhibits the highest efficiency in the three operating points shown in Figs. 9A to 9C for each of the motors A, B and C. All of the three operating points shown in Figs. 9A to 9C are included in the range of 18S illustrated in Figs. 14 to 16. Accordingly, the result of the verification test 3 is also coincident with that of the verification test 2. The operating points are varied depending on a shape or a size (a fan constant) of a blast fan. The fan constant to be used in an air conditioner has a value which is almost close to the fan constant utilized in the verification test 2 (in the vicinity of $1.0 \times 10^{-7}$ in an indoor unit and the vicinity of $4.0 \times 10^{-7}$ in an outdoor unit). In the case in which a permanent magnet motor including a stator core having an outside diameter of approximately 90 mm and using a ferrite magnet is utilized as a driving source of an air blower in a domestic room air conditioner, therefore, it is preferable to have 18 slots and 12 poles in order to obtain a high efficiency.

(Verification Test 4)

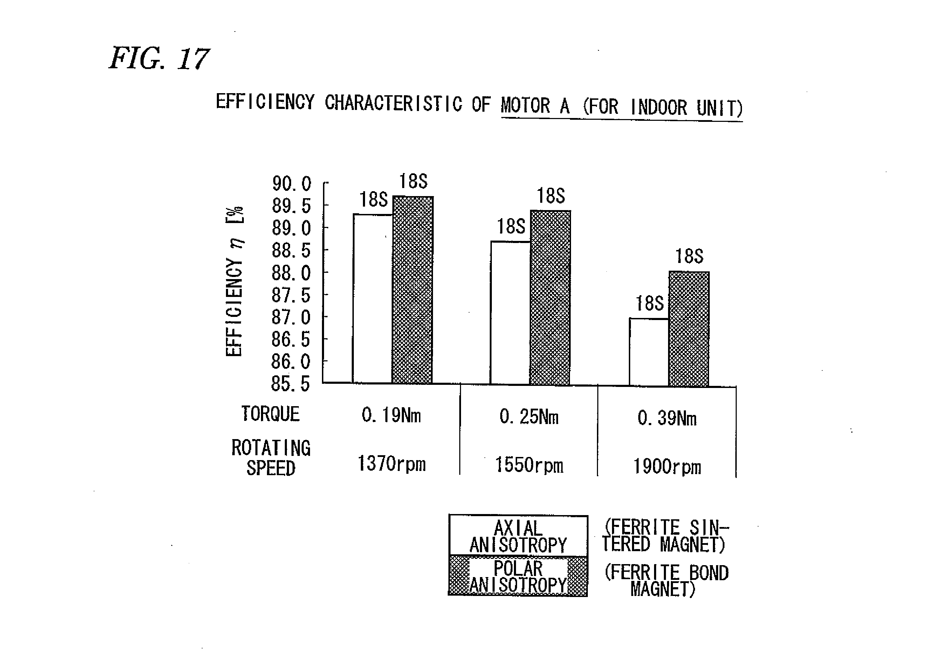

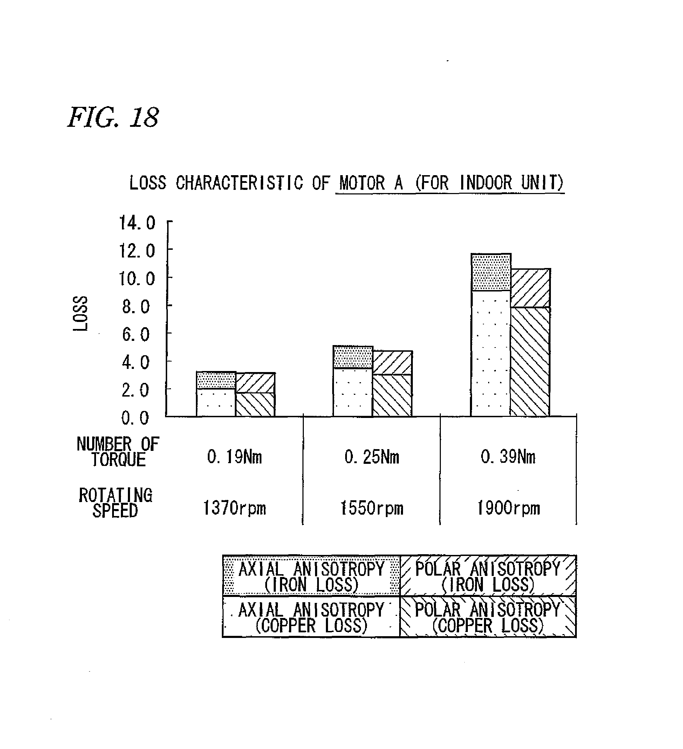

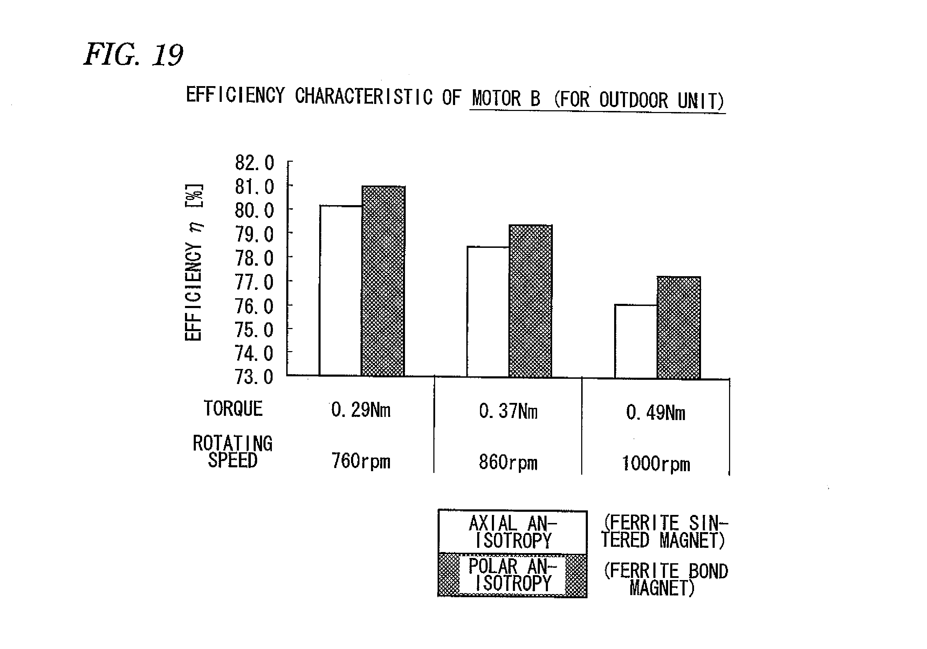

In the test, there is verified a way of a variation in an efficiency characteristic and a loss characteristic in the case in which a type of a permanent magnet in a rotor is set to be a ferrite bond magnet and the case in which the type is set to be a ferrite sintered magnet in motors A and B having 18 slots and 12 poles (18S). Figs. 17 and 18 are graphs showing a result of a verification in the motor A. Fig. 19 is a graph showing a result of a verification in the motor B.

First of all, in the permanent magnet motor 10 according to the embodiment, a ferrite magnet containing iron oxide as a main component is used as a magnetic material of a permanent magnet in order to implement a low cost. The ferrite magnet includes two types of magnets, that is, a ferrite bond magnet and a ferrite sintered magnet. In general, the ferrite sintered magnet has a magnetic flux density which is approximately 1.5 times as high as that of the ferrite bond magnet. Accordingly, it is expected that an efficiency of a motor can be enhanced more greatly by using a permanent magnet having a high magnetic flux density. Actually, the verification is executed for the motors A and B having 12 slots and 8 poles. Consequently, the efficiency can be enhanced more greatly by using the ferrite sintered magnet having a high magnetic flux density in place of the ferrite bond magnet. In the case in which 18 slots and 12 poles are set, however, a result which is contrary to the expectation is obtained.

In other words, in the comparisons based on Figs. 17 and 19, the ferrite bond magnet exhibits a higher efficiency than the ferrite sintered bond magnet in each of the motors A and B.

This is caused by the fact that the stator core has the outside diameter of approximately 90 mm as will be described below. In the case in which the outside diameter of the stator core 17 is regulated, that of the rotor 12 is also controlled. For this reason, it is impossible to increase an outside cylindrical surface area of the rotor 12. Even if the number of poles of the rotor is increased from 8 poles (12S) to 12 poles (18S), therefore, a total number of magnetic fluxes of the rotor 12 is not changed.

On the other hand, in the case in which a magnetic flux leaks between adjacent permanent magnets (poles), a leakage flux is increased corresponding to an increase in the number of the poles. A ferrite sintered magnet in an axial anisotropic orientation has a higher leakage flux between poles than the ferrite bond magnet in a polar anisotropic orientation. Due to the leakage flux between the poles, an efficiency of a motor including the stator core 17 having an outside diameter of approximately 90 mm is enhanced more greatly with use of a ferrite bond magnet having a low magnetic flux density if 12 poles are provided. In the case of a permanent magnet motor including a stator core having an outside diameter of approximately 90 mm, accordingly, it is apparent that the polar anisotropic orientation is more suitable for an orientation of a permanent magnet than the axial anisotropic orientation if 18 slots and 12 poles (18S) are provided.

Although the exemplary embodiment according to the invention has been described above in detail, the invention is not restricted to the embodiment but various changes and modifications can be made without departing from the gist of the invention described in the claims.

## Claims

1. A permanent magnet motor comprising:

    a stator including a stator core, and an insulator for insulating the stator core from the wire; and
    a rotor in which a rotating shaft is attached to a center of the rotor and a permanent magnet is provided in an outer peripheral portion of the rotor,
    wherein the stator core includes an annular yoke portion, a plurality of teeth extended radially from an inner periphery of the yoke portion, and a plurality of slots for accommodating a wire to be wound around the teeth at both ends in a circumferential direction of the teeth, and
    wherein a number of the slots in the stator core is set to be 18, the permanent magnet of the rotor is formed by a ferrite magnet, and a number of poles of the permanent magnet is set to be 12.

2. The permanent magnet motor according to claim 1, wherein a torque of 1 Nm or less and a rotating speed of 2000 rpm or less are set into a drive enabling range,
   the following expression being obtained:

$$T \geq 7.68 \times 10^{-6} NL + 2.40 \times 10^{-3} L$$

   wherein a torque of the permanent magnet motor is represented by T, a rotating speed is represented by N, and a length in a direction of a rotating shaft of the stator core is represented by L.

3. The permanent magnet motor according to claim 1 or 2, wherein the permanent magnet is a ferrite bond magnet which is molded by mixing a ferrite magnetic substance into a resin material, and a magnetic field orientation of the ferrite bond magnet is set to be a polar anisotropic orientation.

*FIG. 1*

*FIG. 2*

## FIG. 3

FIG. 4

*FIG. 5*

*FIG. 6*

FIG. 7

## FIG. 8

WINDING SPECIFICATION OF EACH MOTOR

| | 12-SLOT 8-POLE | | | | | 18-SLOT 12-POLE (THE PRESENT INVENTION) | | | | | 24-SLOT 16-POLE | | | | |
|---|---|---|---|---|---|---|---|---|---|---|---|---|---|---|---|
| | ONE SLOT PART | | | ONE PHASE PART | | ONE SLOT PART | | | ONE PHASE PART | | ONE SLOT PART | | | ONE PHASE PART | |
| | NUMBER OF TURN | WIRE DIAMETER | RESIS-TANCE | NUMBER OF TURN | RESIS-TANCE | NUMBER OF TURN | WIRE DIAMETER | RESIS-TANCE | NUMBER OF TURN | RESIS-TANCE | NUMBER OF TURN | WIRE DIAMETER | RESIS-TANCE | NUMBER OF TURN | RESIS-TANCE |
| | turn | mm | ohm | turn | ohm | turn | mm | ohm | turn | ohm | turn | mm | ohm | turn | ohm |
| MOTOR A | 290 | 0.29 | 4.2 | 1160 | 16.9 | 193 | 0.29 | 2.3 | 1158 | 13.9 | 145 | 0.29 | 1.6 | 1160 | 12.5 |
| MOTOR B | 595 | 0.23 | 15.7 | 2380 | 62.8 | 400 | 0.23 | 8.7 | 2400 | 52.4 | 300 | 0.23 | 6.0 | 2400 | 47.6 |
| MOTOR C | 430 | 0.27 | 9.6 | 1720 | 38.2 | 287 | 0.27 | 5.5 | 1722 | 33.1 | 215 | 0.27 | 3.8 | 1720 | 30.6 |

EP 2 372 871 A2

EP 2 372 871 A2

*FIG. 9A*

MOTOR A

| OPERATING POINT | | $A_L$ | $A_M$ | $A_H$ |
|---|---|---|---|---|
| ROTATING SPEED OF FAN N | (rpm) | 1200 | 1400 | 1500 |
| TORQUE T | (N·m) | 0. 14 | 0. 20 | 0. 24 |

*FIG. 9B*

MOTOR B

| OPERATING POINT | | $B_L$ | $B_M$ | $B_H$ |
|---|---|---|---|---|
| ROTATING SPEED OF FAN N | (rpm) | 760 | 860 | 1000 |
| TORQUE T | (N·m) | 0. 29 | 0. 37 | 0. 49 |

*FIG. 9C*

MOTOR C

| OPERATING POINT | | $C_L$ | $C_M$ | $C_H$ |
|---|---|---|---|---|
| ROTATING SPEED OF FAN N | (rpm) | 750 | 950 | 1100 |
| TORQUE T | (N·m) | 0. 25 | 0. 40 | 0. 53 |

## FIG. 10

**ROTATING SPEED-TORQUE CHARACTERISTIC OF BLAST FAN AND OPERATING POINT OF MOTOR**

## FIG. 11A

### EFFICIENCY CHARACTERISTIC OF MOTOR A

## FIG. 11B

### LOSS CHARACTERISTIC OF MOTOR A

## FIG. 11C

### PHASE CURRENT OF MOTOR A

*FIG. 12A*

EFFICIENCY CHARACTERISTIC OF MOTOR B

*FIG. 12B*

LOSS CHARACTERISTIC OF MOTOR B

*FIG. 12C*

PHASE CURRENT OF MOTOR B

## FIG. 13A

EFFICIENCY CHARACTERISTIC OF MOTOR C

## FIG. 13B

LOSS CHARACTERISTIC OF MOTOR C

## FIG. 13C

PHASE CURRENT OF MOTOR C

*FIG. 14*

MOTOR A

## FIG. 15

MOTOR B

*FIG. 16*

MOTOR C

## FIG. 17

EFFICIENCY CHARACTERISTIC OF MOTOR A (FOR INDOOR UNIT)

| | AXIAL ANISOTROPY | (FERRITE SIN-TERED MAGNET) |
|---|---|---|
| | POLAR ANISOTROPY | (FERRITE BOND MAGNET) |

EP 2 372 871 A2

*FIG. 18*

LOSS CHARACTERISTIC OF MOTOR A (FOR INDOOR UNIT)

| NUMBER OF TORQUE | 0.19Nm | 0.25Nm | 0.39Nm |
| ROTATING SPEED | 1370rpm | 1550rpm | 1900rpm |

| AXIAL ANISOTROPY (IRON LOSS) | POLAR ANISOTROPY (IRON LOSS) |
|---|---|
| AXIAL ANISOTROPY (COPPER LOSS) | POLAR ANISOTROPY (COPPER LOSS) |

FIG. 19

EFFICIENCY CHARACTERISTIC OF <u>MOTOR B</u> (FOR <u>OUTDOOR UNIT</u>)

| TORQUE | 0.29Nm | 0.37Nm | 0.49Nm |
| ROTATING SPEED | 760rpm | 860rpm | 1000rpm |

| | |
|---|---|
| AXIAL AN-ISOTROPY | (FERRITE SIN-TERED MAGNET) |
| POLAR AN-ISOTROPY | (FERRITE BOND MAGNET) |

EP 2 372 871 A2

FIG. 20

LOSS CHARACTERISTIC OF MOTOR A (FOR INDOOR UNIT)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003125569 A